Europäisches Patentamt

European Patent Office

Office européen des brevets

(11) Publication number: **0 190 824**
**A2**

## (12) EUROPEAN PATENT APPLICATION

(21) Application number: **86300227.5**

(22) Date of filing: **15.01.86**

(51) Int. Cl.⁴: **G 01 J 1/42**
**G 02 B 21/00**

(30) Priority: **31.01.85 DE 3503175**

(43) Date of publication of application:
**13.08.86 Bulletin 86/33**

(84) Designated Contracting States:
**AT FR GB**

(71) Applicant: **C. Reichert Optische Werke AG**
**P.O. Box 95 Hernalser Hauptstrasse 219**
**A-1170 Vienna(AT)**

(72) Inventor: **Hartmann, Hans**
**Barawitzkagasse 10/2/7**
**A-1190 Vienna(AT)**

(72) Inventor: **Tschismarov, Franz**
**Salesianergasse 8/51**
**A-1030 Vienna(AT)**

(74) Representative: **Coxon, Philip et al,**
**Eric Potter & Clarkson 14 Oxford Street**
**Nottingham NG1 5BP(GB)**

(54) **Photometer for use with a microscope.**

(57) A photometer (21) for use with a microscope having an object plane (10), an image plane (19) and an optical axis (17) between the planes (10 and 19). The photometer (21) includes an optical divider (14) disposed in the optical axis (17) between the microscope object and image planes (10 and 19). A detector (26) together with the divider (14) are arranged in a photometer axis (23), and a pin hole occluder (24) is arranged in the photometer axis (23) between the detector (26) and the divider (14). Illumination means (35) is disposed in an illumination axis (37) for illuminating the pin hole occluder (24) from behind, a reflective element (42) having a reflective surface is provided for imaging the illuminated pin hole occluder (24) in the microscope image plane (19). The photometer (21) also includes a chopper (49) for interrupting periodically the photometer axis (23) and means (51) for interrupting periodically the illumination axis (37). The chopper (49) and the means (51) for interrupting periodically the illumination axis (37) are synchronized such that when the photometer axis (23) is not interrupted by the chopper (49), the illumination axis (37) is always interrupted.

FIG.3

0190824

DESCRIPTION

The invention relates to a photometer for use with a microscope.

The Leitz MPV 3 microscope photometer includes dividing means having a divider surface which splits a light beam from a microscope objective between the photometer and the microscope eyepiece. This photometer also includes a pin hole occluder which is illuminated from behind with the aid of an illumination arrangement which is disposed in the imaging beam path to the photometer. The pin hole occluder separates the field to be measured in the image of an object under observation. Furthermore, an intermediate image of the the pin hole occluder is provided in the microscope eyepiece by a reflector and with the utilization of a reflection at the divider surface; the image of the pin hole occluder in the eyepiece is formed together with a direct image of the object.

The use of the illumination arrangement must be discontinued during measurement using the photometer. If the illumination arrangement is of the type having a fully reflecting mirror to image the illumination light of the pin hole occluder, then this fully reflecting mirror must be pivotted out of the beam path for the measurement to take place, as a result of which the illumination of the pin hole occluder has to be discontinued so that the pin hole occluder cannot be imaged in the microscope eyepiece. If, in place of the fully reflecting mirror, a partially reflecting mirror is provided to image the illumination light for the pin hole occluder, the light source for the illumination arrangement must be switched off; otherwise the imaged light would also be reflected into a detector of the photometer through the partially reflecting mirror by means of the reflector.

In either case, it is not possible to observe the pin hole occluder in the microscope eyepiece during measurement, and this is found to be troublesome and inconvenient.

It is an object of the invention to provide a photometer for use in a microscope which overcomes the aforementioned problem. More specifically, it is an object of the present invention to provide a photometer in which the pin hole occluder can be imaged in the microscope eyepiece at the same time as measurement is performed.

According to one aspect of the invention there is provided a photometer for use with a microscope having an object plane, an image plane and an optical axis between said planes, said photometer comprising: optical dividing means adapted to be disposed in said optical axis between said microscope object and image planes, a detector arranged in a photometer axis including the optical dividing means, a pin hole occluder arranged in the photometer axis between the detector and the optical dividing means, illumination means disposed in an illumination axis for illuminating the pin hole occluder, a reflective element having a reflective surface for imaging the illuminated pin hole occluder in the microscope image plane, a chopper for interrupting periodically the photometer axis, means for interrupting periodically the illumination axis, the arrangement being such that when the photometer axis is not interrupted by the chopper, the illumination axis is always interrupted.

In one embodiment, the chopper comprises the means for interrupting periodically the illumination axis; the chopper can be configured so that when the photometer axis is not interrupted, the illumination axis is always interrupted.

In another embodiment the means for interrupting periodically the illumination axis comprises a further chopper disposed in the illumination axis. Desirably sychronization means is provided for synchronising each chopper so that when the photometer axis is not interrupted the illumination axis is interrupted. Preferably the synchronization means includes a regulating device for regulating the frequency and phase relationship of each chopper. The regulating devices are connected in an anticyclic manner and are controlled by a common synchronizing signal.

In a further embodiment, the illumination means comprises a flash unit having a first state in which the pin hole occluder is illuminated and a second state in which the pin hole occluder is not illuminated. Preferably in this embodiment synchronizing means is provided for generating a synchronizing signal for switching the flash unit between the first and second states, said synchronizing signal also controlling the chopper.

In all the above embodiments it is preferred that the period during which the illumination axis is interrupted is greater than the period during which the photometer axis is interrupted by the chopper. This enables measurements to be obtained which are as free from error as possible.

If for example a chopper frequency of 200 to 400 Hz is used, so that the pin hole occluder illumination frequency is also in the range of 200 to 400 Hz, then the eye will perceive the pin hole occluder imaged in the microscope eyepiece and illuminated from behind with an apparently constant brightness. The measurement of the light with the detector is not disturbed in this case, since according to the invention the pin hole occluder illumination is synchronized with the chopper in such a manner that measurement with the detector is only undertaken when the pin hole occluder illumination is inoperative.

According to another aspect of the invention there is provided a photometer for use with a microscope having an object plane, an image plane and an optical axis between said planes, said photometer comprising: optical dividing means adapted to be disposed in said optical axis between said microscope object and image planes, a detector arranged in a photometer axis including the optical dividing means, a pin hole occluder arranged in the photometer axis between the detector and the optical dividing means, illumination means disposed in an illumination axis for illuminating the pin hole occluder, a reflective element having a reflective surface for imaging the illuminated pin hole occluder in the microscope image plane, a chopper for interrupting periodically the photometer axis, means for creating chopped light from the illumination means, said chopped light being synchronised in respect of the frequency and phase relationship with the chopper so that when the photometer axis is interrupted, the light from the illumination means is chopped.

Reference is now made to the accompanying drawings in which:

Figure 1 is a schematic side elevation of a first embodiment of a photometer according to the invention;

Figure 2 is a plan view of a rotary element of a chopper shown in Figure 1;

Figure 3 is a schematic side elevation of a second embodiment of a photometer according to the invention;

Figure 4 is a plan view of rotary elements of choppers shown in Figure 3, illustrating the position of the rotary elements relative to one another;

Figure 5 is a block circuit diagram showing synchronization means for the synchronization of the two choppers in the second embodiment;

Figure 6 is a schematic side elevation of a third embodiment of a photometer according to the invention; and

Figure 7 is a plan view of a rotary element of a chopper shown in Figure 4.

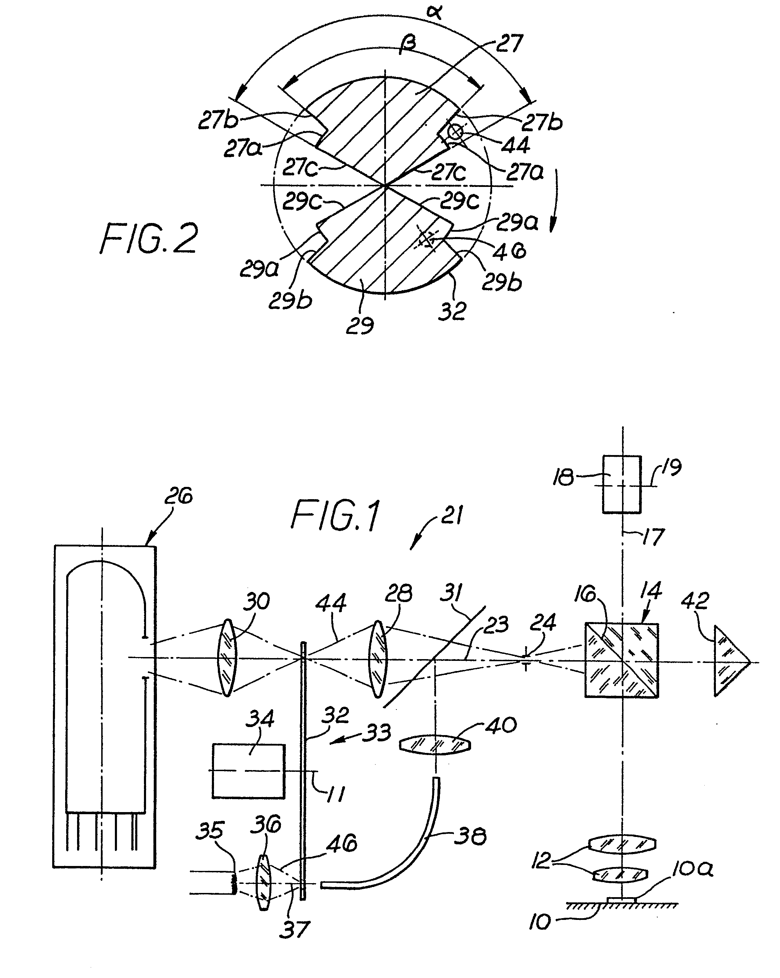

In Figure 1 a microscope includes an object plane 10, a microscope objective 12, and a microscope eyepiece 18 having an intermediate image plane 19; these elements are disposed sequentially on an optical axis 17. An object 10a on the object plane 10 is imaged by means of the microscope objective 12 directly onto the intermediate image plane 19 in the microscope eyepiece 18.

A photometer for use with the microscope is generally designated 21 and includes optical dividing means in the form of a divider prism 14 which is disposed in the optical axis 17 between the objective 12 and the eyepiece 18; the divider prism 14 includes a divider surface 16. The photometer 21 has a photometer axis 23 which extends substantially transverse to the optical axis 17, and intersects said optical axis at the divider surface 16. A pin hole occluder 24, a partially reflective mirror 31, a lens 28, a chopper 33, a lens 30 and a detector 26 are disposed sequentially on the photometer axis 23.

The divider surface 16 reflects to the left, along the photometer axis 23, a proportion of the light from the object 10a. The microscope objective 12 images the object 10a in the plane in which the pin hole occluder 24 is disposed. The pin hole occluder 24 separates a zone from the enlarged intermediate image of the object 10a, the light from the separated zone then being measured subsequently in the detector 26; the detector 26 may be, for example, a photo-multiplier. With the aid of the lenses 28 and 30, the object field in the plane of the pin hole occluder 24 is imaged near the entrance to the detector 26. The chopper 33, which comprises a rotary element 32 and a drive motor 34, is so arranged that the rotary element 32 passes through the common focal point of the lenses 28 and 30, as is shown in Figure 1.

In order also to be able to determine the location of the pin hole occluder 24 in the intermediate image of the object 10a formed in the microscope eyepiece 18, the pin hole occluder 24 is illuminated from behind as shown in Figure 1; this is achieved by the semi-reflective mirror 31 and illuminating means in the form of a light source 35 and a lens 36. The light source 35 and the lens 36 are disposed in an illumination axis 37. A light beam 46 from the light source 35 is focused by the lens 36 in the plane of the rotary element 32 of the choppers 33, so that the rotary element 32 can also chop the light beam from the light source 35. The chopped light is then deflected with the aid of a light guide 38 and directed via a lens 40 to the partially reflective mirror 31. The partially reflective mirror 31 deflects the light from the light source 35 along the photometer axis 23 to the pin hole occluder 24 so that the pin hole occluder is illuminated from behind. The pin hole occluder 24, illuminated from behind, is imaged in the microscope eyepiece 18; the light beam from the pin hole occluder passes along the photometer axis 23 through the divider surface 16 to a reflective element in the form of a triple reflector 42. The triple reflector 42 is disposed on the photometer axis 23 on the opposite side of the divider prism 14 to the pin hole occluder 24. The triple reflector reflects the light from the pin hole occluder 24 back to the divider surface 16 which deflects the light beam into the optical axis 17 towards the microscope eyepiece 18. In this manner, the pin hole occluder 24 appears as a bright spot in the intermediate image plane 19 when the object 10a being studied by means of the microscope is viewed in the microscope eyepiece 18.

The rotary element 32 is rotatable about an axis 11 and has the configuration shown in Figure 2. The rotary element 32 has two substantially identical lobes 27 and 29 which are disposed symmetrically in relation to one another and which have the shape of sectors of circles. The lobes 27 and 29 are each provided with two shoulders 27a and 29a respectively. In this way the lobe 27 is defined by inner edges 27b and outer edges 27c; similarly the lobe 29 is defined by inner edges 29b and outer edges 29c. The angle between the two outer edges 27c is designated $\alpha$ and has a magnitude of substantially 110°. The angle between the two inner edges 27b is designated $\beta$ and has a magnitude of substantially 90°.

A measurement beam 44 corresponds to the zone separated by the pin hole occluder 24 and is directed to the detector 26, along the photometer axis 23. The measurement beam 44 and the axis 23 are spaced from the axis 11 of the rotatable element 32 and intersect the rotatable element 32 in the region of the lobes 27 and 29 having the angular spread $\beta$. The light beam 46 and the illumination axis 37 are spaced from the axis 11 of the rotatable element 32 and intersect the rotatable element 32 in the region of the lobes 27 and 29 having the angular spread $\alpha$. As shown in Figure 2, in this configuration the arrangement is so designed that the photometer axis 23 and the measurement beam 44 are interrupted by the lobe 27 or 29 of the rotary element 32 before the illumination axis 37 and the light beam 46 are cleared. The illumination axis 37 and the light beam 46 are interrupted again by the following lobe, before the photometer axis 23 and the measurement beam 44 are cleared. This cycle is repeated for each successive rotation of the rotary element 32. In this manner, synchronization of the interruptions of the photometer axis 23 and the illumination axis 37 is assured, by purely mechanical means, in such a manner that during measurement with the detector 26 no light from the illumination means can pass into the detector 26 via the triple reflector 42, the divider surface 16 and the partially reflecting mirror 31. Nevertheless, at the customary chopper frequencies of 200 to 400 Hz which are used during measurement, the image of the pin hole occluder 24 appears in the microscope eyepiece 18 with constant brightness, because the eye is not able to follow the rapid variation in light intensity.

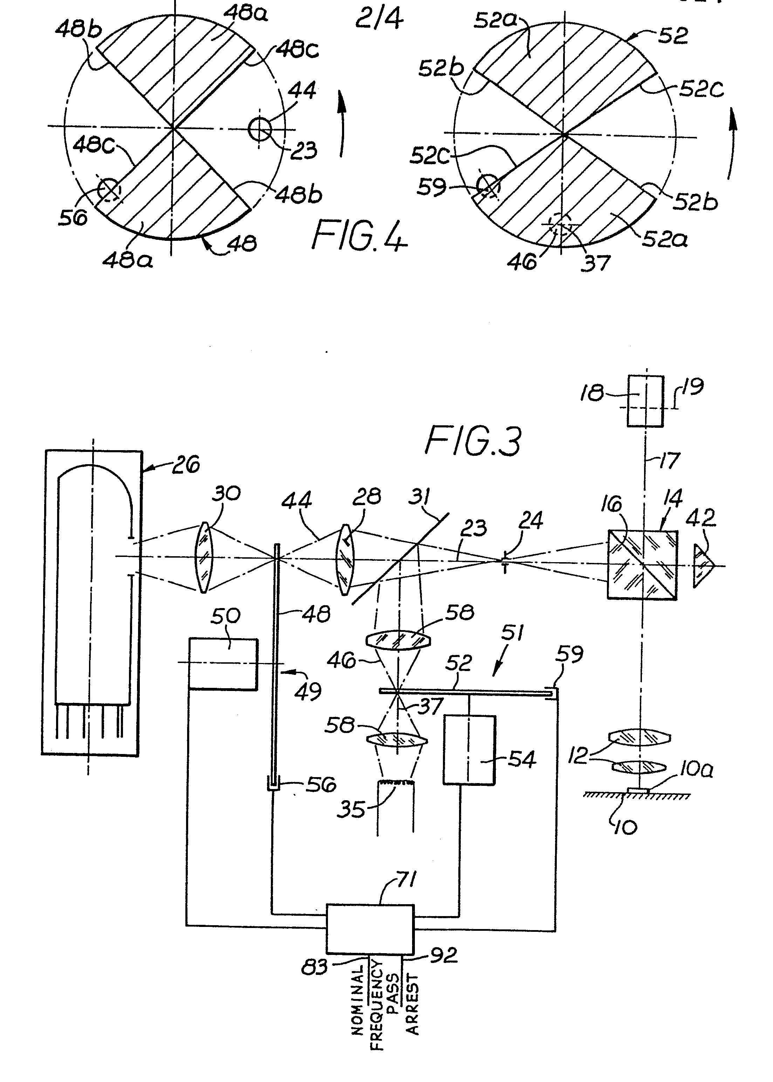

Many of the parts shown in Figure 3 are similar to those shown in Figure 1, and like parts have been designated with like reference numerals.

In the embodiment shown in Figures 3 and 4 two separate choppers 49 and 51 are provided; the chopper 49 comprises a drive motor 50 and a rotary element 48; the chopper 51 comprises a drive motor 54 and a rotary element 52. The drive motor 50 drives the rotary element 48 and the drive motor 54 drives the rotary element 52. The rotary element 48 is disposed in the photometer axis 23, while the rotary element 52 is disposed in the illumination axis 37.

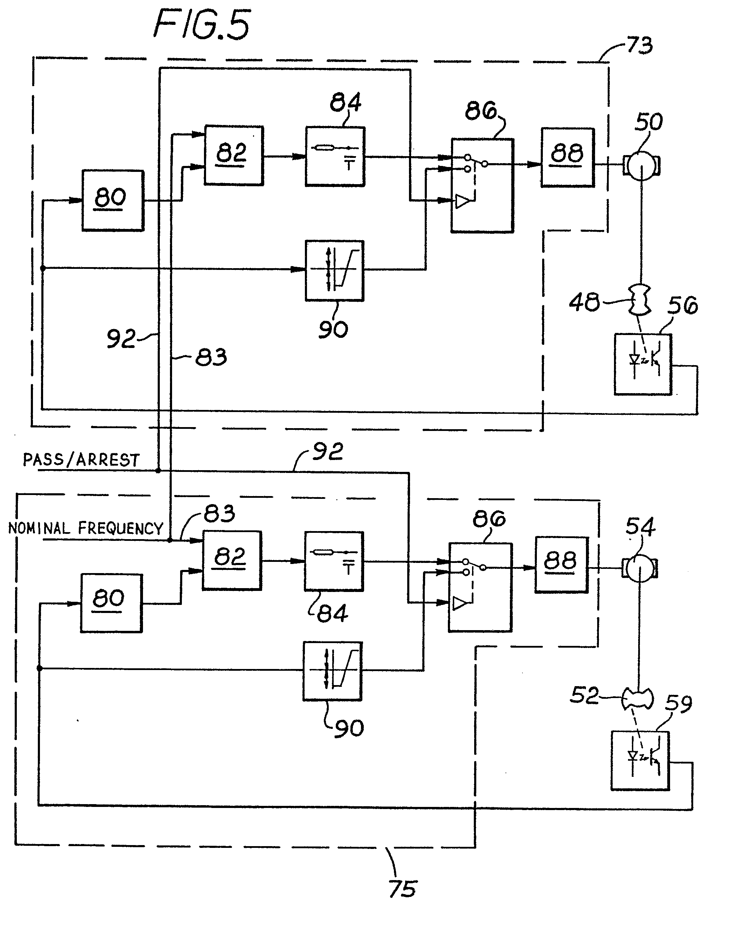

The choppers 49 and 51 are connected to synchronization means 71 which synchronizes each chopper so that when the photometer axis 23 is not interrupted the illumination axis 37 is interrupted. The synchronization means 71 is shown in greater detail in Figure 5 and includes two regulating devices 73 and 75 for regulating the frequency and phase relationship of each chopper 49 and 51.

The regulating devices 73 and 75 are described in our copending European Patent Application of even date entitled "Photometer for use in microscope imaging scanning" the disclosure of which is incorporated herein. In order to control the choppers 49 and 51, the chopper 49 is provided with photoelectric cell 56, and the chopper 51 is provided with a photoelectric cell 59; the light paths of the cells 56 and 59 are interrupted respectively by the rotary elements 48 and 52.

Briefly described, each regulating device 73 and 75 comprises a Schmitt trigger 80 connected to the output of the photoelectric cells 56 and 59. The output of each Schmitt trigger 80 is connected to an input of a digital phase detector 82. The other input of the digital phase detector 82 is connected to a nominal frequency line 83. The output of the digital phase detector 82 is connected to a low pass filter 84 which is in turn connected to an input of a multiplexer 86. The output of the multiplexer 86 is connected to a proportional amplifier 88 which is connected to the respective motor 50 or 54.

The outputs of the photoelectric cells 56 and 59 are also connected to a respective proportional amplifier 90. The amplifier 90 is connected to another input of the multiplexer 86. A PASS/ARREST signal line 92 is also connected to the multiplexer 86. As explained above, the operation of the regulating devices 73 and 75 is described in our copending European Patent Application entitled "Photometer for use in microscope image scanning".

The rotary element 48 comprises two substantially identical lobes 48a each having (in the anticlockwise direction of rotation) a leading edge 48b and a trailing edge 48c. Similarly the rotary element 52 comprises two substantially identical lobes 52a each having a leading edge 52b and a trailing edge 52c.

The anticyclic operation of the two choppers 49 and 51 is achieved by mechanical means; the arrangement is so designed that the measurement beam 44 and the photometer axis 23 are not interrupted when the trailing edge 48c of the lobe 48a of the rotary element 48 is disposed in the light path of the photoelectric cell 56, and that the light beam 46 and the illumination axis 37 are interrupted by one of the lobes 52a of the rotary element 52 when the trailing edge 52c is disposed in the light path of the photoelectric cell 59; this is illustrated in Figure 4.

The lobes 48a of the rotary element 48 have the shape of sectors of circles, which each have an angular spread of, for example, substantially 90°, while the lobes 52a of the rotary element 52 have the shape of sectors of circles which have an angular spread of, for example, substantially 110°. In this manner, it is ensured that the pin hole occluder 24 is not illuminated for a longer period than that required by the measurement, so that the detector 26 is not affected by the light from the illumination means. As long as the measurement beam 44 and the photometer axis 23 are not interrupted by the rotary element 48, the light beam 46 and the illumination axis 37 are interrupted by the rotary element 52. In other respects, the mode of operation is the same as in the first embodiment shown in Figure 1.

The light beam 46 is focussed with the aid of two converging lenses 58 which are disposed in the plane of the rotary element 52 in a manner similar to that in which takes place with the aid of the lenses 28 and 30 for the measurement beam 44; the light beam 46 is focussed in the plane of the rotary element 52.

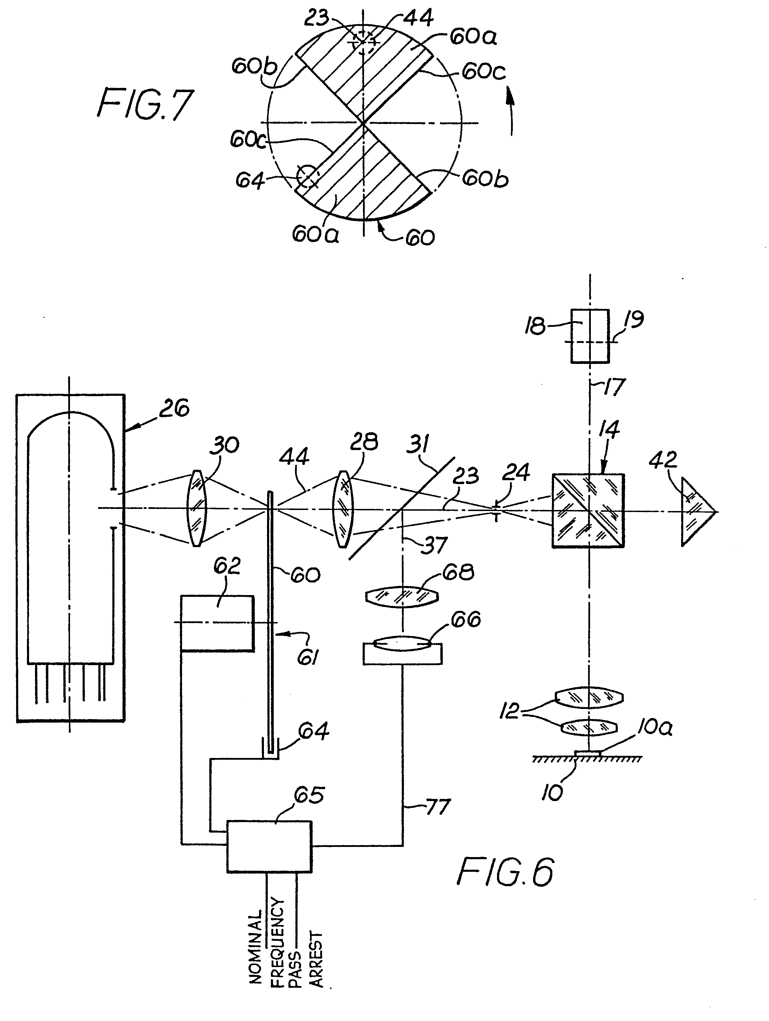

A third embodiment of the invention is shown in Figures 6 and 7. Many of the parts shown in Figure 6 are similar to those shown in Figures 1 and 3, and like parts have been designated with like reference numerals.

In the embodiment shown in Figures 6 and 7 a chopper 61 comprises a drive motor 62 and a rotary element 60; the drive motor 62 drives the rotary element 60. The rotary element 60 comprises two substantially identical lobes 60a each having (in the anticlockwise direction of rotation) a leading edge 60b and a trailing edge 60c. A photoelectric cell 64 is connected to synchronizing means 65. The chopper 61 is controlled in respect of the frequency and its arrest position in the manner described in our copending Patent Application described above.

The chopper 61 serves to interrupt the measurement beam 44 and the photometer axis 23 in the arrest position of the chopper, as is evident from Figure 7.

In this embodiment the light source is not a continuous lamp but a flash lamp 66, which is triggered in dependence upon a sychronizing signal (nominal input frequency) transmitted along a line 77 to the flash lamp 66; the sychronizing signal also predetermines the frequency of the chopper 61. A lens 68 is located behind the flash lamp 66 in the illumination axis 37 to focus the light onto the aperture diaphragm 24. In other respects, the mode of operation of this embodiment is the same as that of the preceding embodiments.

CLAIMS

1.    A photometer for use with a microscope having an object plane, an image plane and an optical axis between said planes, characterised by optical dividing means adapted to be disposed in said optical axis between said microscope object and image planes, a detector arranged in a photometer axis including the optical dividing means, a pin hole occluder arranged in the photometer axis between the detector and the optical dividing means, illumination means disposed in an illumination axis for illuminating the pin hole occluder, a reflective element having a reflective surface for imaging the illuminated pin hole occluder in the microscope image plane, a chopper for interrupting periodically the photometer axis, and means for interrupting periodically the illumination axis, the arrangement being such that when the photometer axis is not interrupted by the chopper, the illumination axis is always interrupted.

2.    A photometer according to Claim 1 characterised in that the chopper comprises the means for interrupting periodically the illumination axis.

3.    A photometer according to Claim 2 characterised in that the chopper is configured so that when the photometer axis is not interrupted, the illumination axis is always interrupted.

4.    A photometer according to Claim 1 characterised in that the means for interrupting periodically the illumination axis comprises a further chopper disposed in the illumination axis.

5.    A photometer according to Claim 4 characterised in that sychronisation means is provided for synchronising each chopper so that when the photometer axis is not interrupted the illumination axis is interrupted.

6.    A photometer according to Claim 5 characterised in that the synchronisation means includes a regulating device for regulating the frequency and phase relationship of each chopper.

7.    A photometer according to Claim 6 characterised in that the regulating devices are connected in an anticyclic manner and are controlled by a common synchronising signal.

8.    A photometer according to Claim 1 characterised in that the illumination means comprises a flash unit having a first state in which the pin hole occluder is illuminated and a second state in which the pin hole occluder is not illuminated.

9.    A photometer according to Claim 8 characterised in that synchronising means is provided for generating a synchronising signal for switching the flash unit between the first and second states, said synchronising signal also controlling the chopper.

10.   A photometer according to any preceding claim characterised in that the period during which the illumination axis is interrupted is greater than the period during which the photometer axis is interrupted by the chopper.

11.   A photometer for use with a microscope having an object plane, an image plane and an optical axis between said planes, characterised by optical dividing means adapted to be disposed in said optical axis between said microscope object and image planes, a detector arranged in a photometer axis including the optical dividing means, a pin hole occluder arranged in the photometer axis between the detector and the optical dividing means, illumination means disposed in an illumination axis for illuminating the pin hole occluder, a reflective element having a reflective surface for imaging the illuminated pin hole occluder in the microscope image plane, a chopper for interrupting periodically the photometer axis, means for creating chopped light from the illumination means, said chopped light being synchronised in respect of the frequency and phase relationship with the chopper so that when the photometer axis is interrupted, the light from the illumination means is chopped.

1/4

0190824

FIG.2

FIG.1

FIG.4

FIG.3

0190824

2/4

NOMINAL FREQUENCY

PASS

ARREST

FIG.5

FIG.7

FIG.6

NOMINAL FREQUENCY PASS ARREST